# EUROPÄISCHE PATENTSCHRIFT

(11) **EP 1 683 407 B1**
(45) Veröffentlichungstag und Bekanntmachung des Hinweises auf die Patenterteilung: **09.04.2008**
(21) Anmeldenummer: 06100382.8
(22) Anmeldetag: 16.01.2006
(51) Int. Cl.: A01F 15/00

(54) **Antriebsanordnung einer landwirtschaftlichen Arbeitsmaschine**
Drive system for agricultural machine
Système d'entraînement pour machine agricole

(30) Priorität: 21.01.2005 DE 102005002880
(43) Veröffentlichungstag der Anmeldung: 26.07.2006
(73) Patentinhaber: Deere & Company, Moline, IL 61265-8098 (US)
(72) Erfinder: Tarasinski, Nicolai Dr., 67227, Frankenthal (DE); Reinards, Marco, 54608, Bleialf (DE)
(74) Vertreter: Holst, Sönke

(56) Entgegenhaltungen:
- EP-A- 0 901 928
- EP-A- 1 153 538
- DE-A1- 3 810 724
- US-A- 5 740 044

## Beschreibung

Die Erfindung betrifft eine Antriebsanordnung einer landwirtschaftlichen Arbeitsmaschine, mit einem Antriebsmotor, der mit einem Zapfwellenausgang zum Antrieb eines Zusatzgeräts und über ein Fahrgetriebe mit im Eingriff mit dem Erdboden befindlichen Mitteln, insbesondere Rädern, verbunden ist, und mit einer elektronischen Steuereinheit, die mit einer Eingabeeinrichtung, einem Sensor zur Erfassung des am Zapfwellenausgang durch das Zusatzgerät abgenommenen Drehmoments und einem Aktor zur Veränderung des Übersetzungsverhältnisses des Fahrgetriebes verbunden und betreibbar ist, die Vortriebsgeschwindigkeit der Arbeitsmaschine durch eine geeignete Ansteuerung des Aktors derart vorzugeben, dass das am Zapfwellenausgang abgenommene Drehmoment einen vorbestimmten Drehmomentsollwert nicht überschreitet, wobei die Eingabeeinrichtung zur Eingabe von Daten eingerichtet ist, aus denen durch die Steuereinheit der Drehmomentsollwert ableitbar ist.

Im Stand der Technik sind landwirtschaftliche Traktoren mit einem Antriebsmotor ausgestattet, der im Betrieb die Räder zum Vortrieb des Traktors und eine Zapfwelle antreibt, die zum Antrieb von Zusatzgeräten dient, wie Bodenbearbeitungsgeräten oder Ballenpressen. Zwischen den Motor und den Zapfwellenausgang des Traktors ist ein Zapfwellengetriebe geschaltet. Derartige Zapfwellengetriebe weisen in der Regel mehrere durch einen Bediener auswählbare Übersetzungsstufen auf, die bei bestimmten Motordrehzahlen zu gewünschten Drehzahlen der Zapfwelle führen. Die Übersetzung eines zwischen dem Verbrennungsmotor und den Rädern in den Antriebsstrang eingefügten Fahrgetriebes ist in Stufen oder stufenlos veränderlich, um die Fahrgeschwindigkeit des Traktors zu verändern.

In der EP 1 153 538 A wird eine Kombination aus einem Traktor und einer Ballenpresse beschrieben. Durch eine Messung des Drehmoments an der Zapfwelle des Traktors wird eine Information über die zum Drehmoment proportionale Flussrate des von der Ballenpresse aufgenommenen Materials gewonnen und mit einer gewünschten Flussrate verglichen. Wird die gewünschte Flussrate um einen bestimmten Wert über- oder unterschritten, wird die Vortriebsgeschwindigkeit des Traktors verändert, indem das Übersetzungsverhältnis des Fahrgetriebes selbsttätig entsprechend verstellt wird. Die Drehzahl des Antriebsmotors und somit der Zapfwelle bleibt dabei konstant. In einem Speichermittel (ROM oder CD-ROM), das sich an Bord des mit einem Lesegerät für das Speichermittel ausgestatteten Traktors befindet, sind die Flussraten als Funktion der Übersetzungsstufen des Fahrgetriebes bei unterschiedlichen Schwaddichten abgespeichert. Anhand des gemessenen Drehmomentwertes wird die aktuelle Flussrate bestimmt. Die Ansteuerung des Getriebes erfolgt anhand eines Vergleichs zwischen der aus dem Drehmoment an der Zapfwelle abgeleiteten aktuellen Flussrate und einem fest vorgegebenen Werts für eine optimale Flussrate. Die zu wählende Übersetzungsstufe des Fahrgetriebes wird anhand des im Speichermittel abgespeicherten Verhältnisses zwischen der Flussrate und der Übersetzungsstufe ausgewählt. Hier ist als nachteilig anzusehen, dass die beschriebene selbsttätige Steuerung nur dann funktioniert, wenn für das jeweils verwendete Zusatzgerät ein geeignetes Speichermittel vorhanden ist. Falls der Traktor und das Zusatzgerät von verschiedenen Herstellern bereitgestellt werden, ist demnach ein Zusammenwirken auf die beschriebene Weise fast unmöglich. Für andere Zusatzgeräte, bei denen keine Flussraten messbar sind, wie bei Bodenbearbeitungsmaschinen, ist diese Steuerung ebenfalls nicht geeignet.

Die EP 0 901 928 A beschreibt einen anderen Traktor, der mit einer Messeinrichtung zur Erfassung des an einem Zapfwellenausgang abgenommenen Drehmoments ausgestattet ist. Der Maximalwert des Drehmoments am Zapfwellenausgang wird durch den Bediener eingespeichert. Das kann durch manuelle Eingabe der Werte erfolgen oder durch Auswahl des entsprechenden Zusatzgeräts (Mähwerk, Roder, Hersteller, Typ) aus einer im zentralen Rechner des Traktors eingespeicherten Zusatzgeräteliste, in der die zugehörigen Grenzwerte gespeichert sind. Um zu verhindern, dass der Antriebsstrang des Traktors oder des Zusatzgeräts im Überlastungsfall beschädigt wird, erfolgt ein Vergleich zwischen dem Drehmoment am Zapfwellenausgang und dem vorgegebenen Maximalwert. Wird der Maximalwert überschritten, wird selbsttätig die Drehzahl des Verbrennungsmotors reduziert. Hier ist als nachteilig anzusehen, dass im Falle der Überschreitung des zugelassenen Drehmoments sowohl die Zapfwelle als auch der Fahrantrieb mit geringerer Geschwindigkeit angetrieben wird. Eine Beseitigung einer eventuellen Verstopfung im Zusatzgerät ist dabei nicht möglich, da beispielsweise bei einer Ballenpresse durch die Einzugsorgane weniger Material abgefördert wird als zuvor, da wegen der im Verhältnis zur Fahrgeschwindigkeit gleich bleibenden Drehzahl der Zapfwelle die pro Fahrstrecke aufgenommene Materialmenge gleich bleibt.

Im Artikel "Mikroelektronik für Überwachungs-, Regelungs- und Managementaufgaben" von R. Artmann, Landtechnik 1986, Seite 318ff wird eine nicht näher spezifizierte Regelung des Drehmoments an der Zapfwelle oder des Getriebegangs eines Traktors erwähnt.

Die der Erfindung zu Grunde liegende Aufgabe wird darin gesehen, eine Antriebsanordnung mit einem Verbrennungsmotor, einem Zapfwellenausgang und einem Fahrgetriebe bereitzustellen, die einem Bediener eine problemlose und vom Typ und Hersteller des Zusatzgeräts unabhängige Vorgabe eines gewünschten oder maximalen Drehmoments an der Zapfwelle ermöglicht und bei einer Überschreitung des Drehmoments die Fahrgeschwindigkeit reduziert.

Diese Aufgabe wird erfindungsgemäß durch die Lehre des Patentanspruches 1 gelöst, wobei in den weiteren Patentansprüchen Merkmale aufgeführt sind, die die Lösung in vorteilhafter Weise weiterentwickeln.

Eine selbstfahrende landwirtschaftliche Arbeitsmaschine weist einen Antriebsmotor, in der Regel einen Verbrennungs- (z. B. Diesel-) Motor auf, der einen Zapfwellenausgang und über ein Fahrgetriebe im Eingriff mit dem Erdboden befindliche Mittel antreibt, insbesondere Räder oder Raupenlaufwerke, um die Arbeitsmaschine über eine mit einem Zusatzgerät, das durch den Zapfwellenausgang angetrieben wird, zu bearbeitende Fläche zu bewegen. Eine elektronische Steuereinheit ist mit einer Eingabeeinrichtung, einem Sensor zur Erfassung des Drehmoments am Zapfwellenausgang sowie einem Aktor verbunden, der zur stufigen oder stufenlosen Veränderung des Übersetzungsverhältnisses des Fahrgetriebes dient. Im Betrieb wird das Drehmoment an der Zapfwelle durch den Sensor gemessen und mit einem vorbestimmten Drehmomentsollwert verglichen. Wird der Drehmomentsollwert überschritten, veranlasst die Steuereinheit den Aktor, das Übersetzungsverhältnis des Fahrgetriebes in Richtung kleinerer Vortriebsgeschwindigkeit zu verändern, um die Belastung des Zusatzgeräts und damit auch das Drehmoment am Zapfwellenausgang zu verringern. Eine Eingabeeinrichtung ermöglicht die Eingabe von Daten durch einen Bediener, aus denen die Steuereinheit im Betrieb den Drehmomentsollwert ableitet, wobei die Arbeitsmaschine tatsächlich in Betrieb gesetzt wird und sobald der gewünschte Drehmomentsollwert erreicht ist, eine Eingabe des Bedieners erfolgt, die zu einer Übernahme des mit dem Sensor gemessenen, aktuellen Drehmomentwerts als Drehmomentsollwert führt.

Auf diese Weise erhält man eine Antriebsanordnung, die für Zusatzgeräte beliebiger Art und beliebiger Hersteller eine Begrenzung des Drehmoments am Zapfwellenausgang ermöglicht.

In einer bevorzugten Ausführungsform der Erfindung erfolgt nicht nur eine Begrenzung des Drehmoments an der Zapfwelle, sondern eine Regelung. Die Vortriebsgeschwindigkeit der Arbeitsmaschine wird dann durch die Steuereinheit derart geregelt, dass der Drehmomentsollwert am Zapfwellenausgang zumindest näherungsweise eingehalten wird. Um den Bediener an Bord der Arbeitsmaschine nicht ständigen Geschwindigkeitsänderungen auszusetzen, erfolgt vorzugsweise eine Veränderung des Übersetzungsverhältnisses des Fahrgetriebes nur dann, wenn das am Zapfwellenausgang gemessene Drehmoment einen bestimmten, sich nach oben und unten erstreckenden Grenzbereich um den Drehmomentsollwert verlässt. Dieser Grenzbereich kann fest vorgegeben oder durch den Bediener eingebbar sein, da die auftretenden Schwankungen des am Zapfwellenausgang abgenommenen Drehmoments je nach Art des Zusatzgeräts variieren. So treten bei Ballenpressen im Allgemeinen kleinere Variationen des Drehmoments auf als bei Ladewagen, so dass man bei ersteren einen kleineren Grenzbereich wählen würde als bei letzteren. Es wäre auch denkbar, dass die Steuereinrichtung den Grenzbereich selbsttätig aus einer Information über den Typ des Zusatzgeräts ableitet.

Die Drehzahl des Antriebsmotors bleibt zweckmäßigerweise zumindest etwa konstant, während die Steuereinheit die Vortriebsgeschwindigkeit variiert. Dadurch erreicht man, dass sich der Zapfwellenausgang mit konstanter Geschwindigkeit dreht, so dass auch das Zusatzgerät stets mit seiner optimalen Geschwindigkeit angetrieben wird. Im Falle einer Überlastung des Zusatzgeräts, z. B. durch hohe aufgenommene Gutmengen bei einer Ballenpresse oder einem Ladewagen oder bei verdichteten Bodenbereichen beim Bodenbearbeiten, wird durch die verringerte Vortriebsgeschwindigkeit dem Zusatzgerät weniger neues Material zugeführt, so dass die Überlastung abgebaut werden kann.

Der Sensor zur Erfassung des Drehmoments am Zapfwellenausgang befindet sich vorzugsweise an Bord des Arbeitsfahrzeugs. Das hat den Vorteil, dass keine zusätzliche Verbindung zwischen der Steuereinheit und einem am Zusatzgerät angeordneten Sensor bereitzustellen ist, und dass der Sensor für alle Zusatzgeräte verwendbar ist. Eine Messung des Drehmoments kann beispielsweise derart erfolgen, dass durch Sensoren am Ein- und Ausgang einer Zapfwellenkupplung eine Drehzahlermittlung erfolgt, wobei der Kupplungsschlupf aus den vor und hinter der Kupplung herrschenden Drehzahlen ermittelt wird, indem der Kupplungsschlupf laufend auf einen konstanten Wert eingestellt und gehalten wird und aus dem konstanten Schlupfwert und einem dem Kupplungsdruck entsprechenden Wert das durch die Kupplung übertragene Drehmoment ermittelt wird. Ein derartiger Drehmomentsensor wird in der EP 1 293 697 A offenbart, deren Inhalt durch Verweis mit in die vorliegenden Unterlagen aufgenommen wird. Geeignete Drehmomentmesswellen sind unter der Bezeichnung DLC 250 auch von der Firma GKN Walterscheid, Lohmar, DE erhältlich.

Schließlich wird vorgeschlagen, dass die Steuereinheit die Vortriebsgeschwindigkeit der Arbeitsmaschine nur in vorgegebenen oder durch den Bediener eingebbaren Grenzen variiert. Dadurch vermeidet man das Unter- und Überschreiten von Grenzen, die bei der Feldarbeit sinnvoll sind. Die Vorgabe der oberen Grenze kann durch die normalerweise zur Geschwindigkeitsvorgabe dienenden Elemente erfolgen, z. B. ein Gaspedal oder einen Handgashebel oder die Betriebsbremse. Als obere Geschwindigkeitsgrenze wird insbesondere die Geschwindigkeit verwendet, die die Arbeitsmaschine beim Aktivieren der selbsttätigen Steuerung gerade hatte.

In den Zeichnungen ist ein nachfolgend näher beschriebenes Ausführungsbeispiel der Erfindung dargestellt. Es zeigt:
- Fig. 1: eine seitliche Ansicht einer landwirtschaftlichen Arbeitsmaschine in Form eines Traktors mit einem daran gehängten Zusatzgerät in Form einer Rundballenpresse,
- Fig. 2: eine schematische Darstellung der Antriebsanordnung der Arbeitsmaschine,
- Fig. 3: ein Programmablaufschema, nach dem die Steuereinheit beim Drehmomentregeln arbeitet.

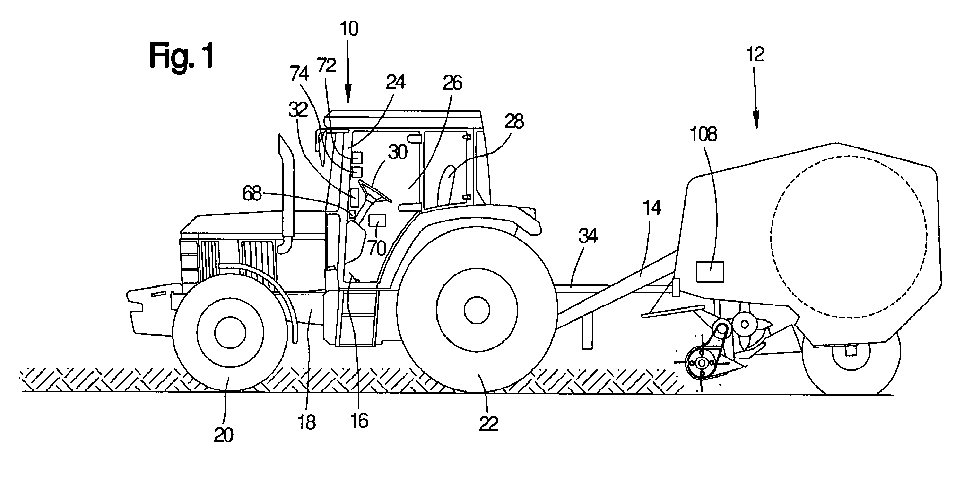

Die Figur 1 zeigt eine seitliche Ansicht einer landwirtschaftlichen Arbeitsmaschine 10 in Form eines Traktors und eines mittels einer Deichsel 14 an eine Anhängekupplung (nicht gezeigt) der Arbeitsmaschine 10 gekoppelten Zusatzgeräts 12 in Form einer Rundballenpresse. An die Arbeitsmaschine 10 können anstelle der Rundballenpresse oder zusätzlich dazu auch beliebige andere, gezogene oder angebaute oder aufgehängte Zusatzgeräte angebracht werden, wie Feldhäcksler oder angetriebene Bodenbearbeitungsgeräte wie Kreiseleggen oder Bestellkombinationen. Die Arbeitsmaschine 10 baut sich auf einem tragenden Rahmen 18 auf, der sich auf lenkbaren Vorderrädern 20 und antreibbaren Hinterrädern 22 abstützt und eine Kabine 24 trägt, in der sich ein Bedienerarbeitsplatz 26 befindet.

Der Bedienerarbeitsplatz 26 umfasst einen Sitz 28, ein Lenkrad 30, ein Gaspedal 16 und andere Pedale für Bremse und Kupplung (nicht gezeigt) und einige im Griffbereich des sich am Bedienerarbeitsplatz 26 befindlichen Bedieners angeordnete Eingabeelemente zur Vorgabe auswählbarer Funktionen der Arbeitsmaschine 10. Zu letzteren zählt eine Auswahleinrichtung 32 für die Übersetzungsstufe eines Zapfwellengetriebes 46, ein Handgashebel 70, ein Zapfwellenschalter 68, eine Eingabeeinrichtung 74 zur Vorgabe eines Drehmomentsollwerts am Zapfwellenausgang 56 und ein virtuelles Terminal 72 eines nach ISO 11783 arbeitenden Bussystems mit einer Tastatur 90 und einer Anzeigeeinrichtung 94. Die Auswahleinrichtung 32, die Eingabeeinrichtung 74 und/oder der Zapfwellenschalter 68 könnten auch als Menüpunkte auf dem Terminal 72 realisiert werden. Anstelle des Terminals 72 können auch beliebige andere Eingabe- und Anzeigeeinrichtungen verwendet werden. Das Gaspedal 16 ist mit einem Sensor versehen, der einer Bedienerschnittstellenlogik 64 elektrische Signale übermittelt, die Informationen über die jeweilige Stellung des Gaspedals 16 enthalten.

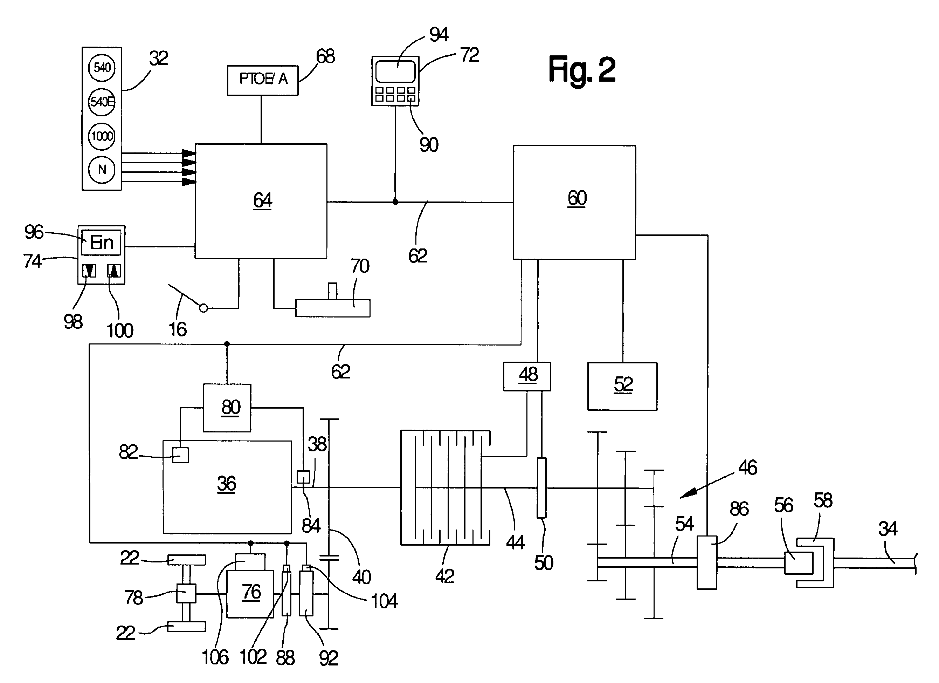

Die Figur 2 zeigt schematisch die Antriebsanordnung der Arbeitsmaschine 10 zum Antrieb der Hinterräder 22 und einer Zapfwelle 34, die zum Antrieb antreibbarer Elemente des Zusatzgeräts 12 dient. Ein Antriebsmotor 36, in der Regel ein Dieselmotor, treibt eine Welle 38 an, die über ein Zahnrad 40 zum Antrieb der Hinterräder 22 und vorzugsweise auch der Vorderräder 20 und ggf. anderer antreibbarer Einrichtungen der Arbeitsmaschine 10, wie eines Kompressors einer Klimaanlage und eines Stromgenerators dient. Die Hinterräder 22 und ggf. Vorderräder 20 werden vom Zahnrad 40 her über eine Kupplung 88 und ein Fahrgetriebe mit stufenlos oder in Stufen wählbarer, in den einzelnen Übersetzungsstufen konstanter Übersetzung und ein Differenzialgetriebe 78 angetrieben.

Das Fahrgetriebe kann beispielsweise ein rein hydraulisch arbeitendes Getriebe mit einer von der Kupplung 88 angetriebenen Hydraulikpumpe und einem die Räder antreibenden Hydromotor oder Hydrostaten sein, wobei das Übersetzungsverhältnis des Getriebes durch Verstellen der Taumelscheiben der Pumpe und/oder des Motors veränderbar ist. In einer anderen Ausführungsform ist es ein mehrstufiges mechanisches Getriebe mit vorgeschaltetem Drehmomentwandler, wie es insbesondere in Personenkraftwagen verwendet wird (s. EP 0 744 564 A), oder ein mechanisches Getriebe mit hinreichend vielen Übersetzungsstufen und automatisch geschalteter Kupplung (s. US 4 576 065) oder mit Planetenrädern und Reibungskupplungen. Denkbar ist auch die Verwendung eines Fahrgetriebes mit stufenlos verstellbarer Übersetzung, das beispielsweise mit Keilriemen arbeitet, die um Riemenscheiben mit verstellbarem Durchmesser umlaufen, oder mit einem mechanischen und einem hydraulischen (oder elektrischen) Antriebszweig, wobei ein Planetengetriebe ein mit fester oder in Stufen änderbarer Drehzahl mechanisch und ein mit veränderbarer Drehzahl hydraulisch oder elektrisch angetriebenes Element umfasst und das dritte Element zum Abtrieb dient, oder einer Kombination mehrerer der erwähnten Getriebe.

In der dargestellten Ausführungsform umfasst das Fahrgetriebe ein Lastschaltgetriebe 92, welches Planetenradsätze mit Kupplungen und Bremsen enthält, die eine Umschaltung der Gänge unter Last ermöglichen, und ein nachgeschaltetes Synchronschaltgetriebe 78. Das Lastschaltgetriebe 92 und das Synchronschaltgetriebe 78 sind mit jeweils einem Aktor 104 bzw. 106 zur Auswahl der Übersetzungsstufe ausgeschaltet. Da beide Aktoren 104 und 106 unabhängig voneinander ansteuerbar sind, ist eine hohe Anzahl an unterschiedlichen Übersetzungsstufen verfügbar, die sich durch Multiplikation der Anzahl der Übersetzungsstufen des Lastschaltgetriebes 92 mit der Anzahl der Übersetzungsstufen des Synchronschaltgetriebes 76 ergibt. In den Antriebsstrang zwischen dem Lastschaltgetriebe 92 und dem Synchronschaltgetriebe 76 ist weiterhin eine Kupplung 88 eingefügt, die durch einen Kupplungsaktor 102 zwischen einer Schließ- und Öffnungsposition bewegbar ist.

Die Welle 38 ist auch mit einer hydraulisch betätigbaren Kupplung 42 verbunden, die ausgangsseitig mit einer Eingangswelle 44 eines Zapfwellengetriebes 46 verbunden ist. Die Kupplung 42 wird mittels eines Ventilzusammenbaus 48 betätigt, der auch mit einer auf der Eingangswelle 44 angeordneten Bremse 50 verbunden ist.

Das Zapfwellengetriebe 46 weist drei unterschiedliche, auswählbare Übersetzungsstufen auf und umfasst daher drei kämmende Zahnradpaare. Die Übersetzungsstufe wird mittels eines elektrohydraulisch (oder elektrisch) fremdkraftbetätigten Aktors 52 ausgewählt, der beispielsweise mittels verschiebbarer Kopplungsglieder (s. EP 0 819 562 A) festlegt, welches der drei auf einer Abtriebswelle 54 des Zapfwellengetriebes 46 angeordneten Zahnräder in drehmomentschlüssiger Verbindung mit der Abtriebswelle 54 steht. Alternativ könnte der Aktor 52 festlegen, welches der drei auf der Eingangswelle 44 angeordneten Zahnräder in drehmomentschlüssiger Verbindung mit der Eingangswelle 44 steht. Der Aktor 52 ermöglicht die Auswahl von drei Übersetzungsstufen, von denen in der vorliegenden Ausführungsform eine erste bei der Nenndrehzahl des Antriebsmotors 36 von 2100/min eine Drehzahl der Abtriebswelle 54 von 1000/min ermöglicht, eine zweite bei einer abgesenkten Drehzahl des Antriebsmotors 36 von 1800/min eine Drehzahl der Abtriebswelle 54 von 540/min ermöglicht, und eine dritte bei der Nenndrehzahl des Antriebsmotors 36 von 2100/min eine Drehzahl der Abtriebswelle 54 von 540/min ermöglicht. Außerdem besteht die Möglichkeit, keines der Zahnräder des Zapfwellengetriebes 46 mit der Eingangswelle 44 bzw. Abtriebswelle 54 zu koppeln, um das Zapfwellengetriebe 46 in eine Neutralstellung zu bringen, in der die Abtriebswelle 54 auch bei aktiver Bremse 50 frei drehbar ist.

Die Abtriebswelle 54 ist mit einem Zapfwellenausgang 56 in Form eines Zapfwellenstummels verbunden, auf den die mit einem Hohlwellenendstück 58 ausgestattete Zapfwelle 34 des Zusatzgeräts 12 aufschiebbar ist. Die Zapfwelle 34 ist in der Regel als Gelenkwelle ausgeführt.

Eine elektronische Steuereinheit 60 ist mit dem Ventilzusammenbau 48 und mit dem Aktor 52 verbunden. Über einen Gerätebus 62 (z. B. CAN-Bus) ist sie außerdem mit einer Bedienerschnittstellenlogik 64 verbunden, die ihrerseits mit der Auswahleinrichtung 32, der Eingabeeinrichtung 74, dem Gaspedal 16 und dem Handgashebel 70 und dem Zapfwellenschalter 68 verbunden ist. Über den Bus 62 ist die Steuereinheit 60 außerdem mit dem virtuellen Terminal 72, den Aktoren 104 und 106 und dem Kupplungsaktor 102 der Kupplung 88 verbunden. Die Auswahleinrichtung 32 umfasst vier Drucktasten, von denen jeweils eine einer anderen der erwähnten Übersetzungsstufen und der Neutralstellung des Zapfwellengetriebes 46 zugeordnet ist.

Die Auswahleinrichtung 32 ermöglicht dem Bediener durch manuelles Betätigen der vier Drucktasten je eine der drei Übersetzungsstufen des Zapfwellengetriebes 46 oder die Neutralstellung auszuwählen. Die Bedienerschnittstellenlogik 64 übermittelt eine Information über die Vorgabe des Bedieners über den Bus 62 an die Steuereinheit 60, die ihrerseits den Aktor 52 entsprechend der erhaltenen Information ansteuert. Die jeweils ausgewählte Übersetzungsstufe kann dem Bediener durch eine Beleuchtung der zugeordneten Drucktaste der Übersetzungsstufenauswahleinrichtung 32 angezeigt werden.

Verbringt der Bediener den Zapfwellenschalter 68 in die Betriebsposition, übermittelt die Bedienerschnittstellenlogik 64 eine entsprechende Information über den Bus 62 an die Steuereinheit 60, die ihrerseits den Ventilzusammenbau 48 veranlasst, die Bremse 50 zu lösen und die Kupplung 42 zu schließen. Verbringt der Bediener den Zapfwellenschalter 68 in die Außerbetriebsposition, übermittelt die Bedienerschnittstellenlogik 64 analog eine entsprechende Information über den Bus 62 an die Steuereinheit 60, die ihrerseits den Ventilzusammenbau 48 veranlasst, die Kupplung 42 zu öffnen und die Bremse 50 zu aktivieren.

Die Steuereinheit 60 ist weiterhin über den Bus 62 mit einer Motorsteuerung 80 verbunden, die wiederum eine Einspritzanlage 82 des Antriebsmotors 36 steuert und der von einem Drehzahlsensor 84 eine Information über die jeweilige Drehzahl der Welle 38 zugeführt wird. Ein mit der Steuereinheit 60 verbundener Sensor 86 erfasst das von der Abtriebswelle 54 übertragene Drehmoment. Der Drehzahlsensor 84 kann mit der zugehörigen Welle 38 beispielsweise optisch (durch mit der Welle 38 verbundene gelochte Kodierscheiben, die mit Lichtschranken zusammenarbeiten) oder magnetisch (durch mit der Welle 38 verbundene Magnete, die mit Induktionsspulen, Reedrelais oder Hallsensoren zusammenarbeiten) zusammenwirken oder die Drehzahl auf beliebige andere Weise erfassen. Der Sensor 86 umfasst auf der Abtriebswelle 54 angeordnete Dehnungsmessstreifen, deren Anschlüsse durch Schleifkontakte mit der Steuereinheit 60 verbunden sind, um die durch das übertragene Drehmoment bedingte elastische Torsion der Abtriebswelle 54 zu erfassen. Es können auch beliebige andere Ausführungsformen für den Sensor 86 zur Anwendung kommen, beispielsweise Lasersensoren zur Erfassung der Torsion der Abtriebswelle 54.

Die dritte Eingabeeinrichtung 74 umfasst drei Tasten 96, 98 und 100. Die erste Taste 96 dient zum Einschalten einer Automatikbetriebsart und die anderen Tasten zum Verringern (Taste 98) oder Vergrößern des Drehmomentsollwerts (Taste 100) an der Abtriebswelle 54.

Im Betrieb weist die Steuereinheit 60 die Motorsteuerung 80 an, den Antriebsmotor 36 mit einer Drehzahl laufen zu lassen, die der aktuellen Eingabe der Auswahleinrichtung 32 entspricht, d. h. je nach gedrückter Taste der Auswahleinrichtung 32 mit einer festen Drehzahl von 2100/min oder 1800/min. Alternativ wird die Drehzahl mittels einer separaten Drehzahleingabeeinrichtung (nicht gezeigt) oder über das virtuelle Terminal 72 durch den Bediener eingegeben. Wird die Neutralstellung gewählt, hängt die Drehzahl des Antriebsmotors 36 von der Position des Gaspedals 16 oder des Handgashebels 70 ab oder wird durch den Bediener eingegeben oder sie ist fest vorgegeben.

Im Betrieb wird die Vortriebsgeschwindigkeit der Arbeitsmaschine 10 zunächst durch das Gaspedal 16 oder den Handgashebel 70 vorgegeben. Die Steuereinheit 60 steuert dann die Aktoren 104 und 106 und, vor und nach dem Betätigen des Aktors 106 den Kupplungsaktor 102 zum Öffnen und Schließen der Kupplung 88 an, so dass das Fahrgetriebe die Räder 22 mit der gewünschten Geschwindigkeit antreibt. Das vom Sensor 86 gemessene Drehmoment an der Abtriebswelle 54 wird auf der Anzeigeeinrichtung 94 des virtuellen Terminals 72 angezeigt.

Der Bediener kann, sobald das angezeigte Drehmoment mit einem für das Zusatzgerät 12 passenden, optimalen Drehmomentsollwert übereinstimmt, die Taste 96 der Eingabeeinrichtung 74 betätigen. Dann ignoriert die Steuereinheit 60 die mit dem Gaspedal 16 oder dem Handgashebel 70 durchgeführten Eingaben und stellt durch Betätigung der Aktoren 104 und 106 die Vortriebsgeschwindigkeit der Arbeitsmaschine 10 derart ein, dass das mit dem Sensor 86 gemessene Drehmoment mit dem Drehmomentsollwert zumindest näherungsweise übereinstimmt. Die Taste 98 ermöglicht eine stufenweise Herabsetzung des Drehmomentsollwerts und die Taste 100 ermöglicht eine stufenweise Heraufsetzung des Drehmomentsollwerts, z. B. in Schritten von 10 Nm. Alternativ oder zusätzlich kann der gewünschte Drehmomentsollwert mittels der Tastatur 90 des virtuellen Terminals 72 als Zahlenwert eingegeben werden, oder es wird der Hersteller und Typ des Zusatzgeräts 12 in die Tastatur 90 eingegeben und die Steuereinheit 90 leitet anhand einer Datenbank den Drehmomentsollwert daraus ab. Der Drehmomentsollwert kann auch in einem mit dem Bus 62 verbundenen Speicher 108 an Bord des Zusatzgeräts 12 abgespeichert sein und die Steuereinheit 60 erfragt ihn bei Bedarf vom Speicher 108.

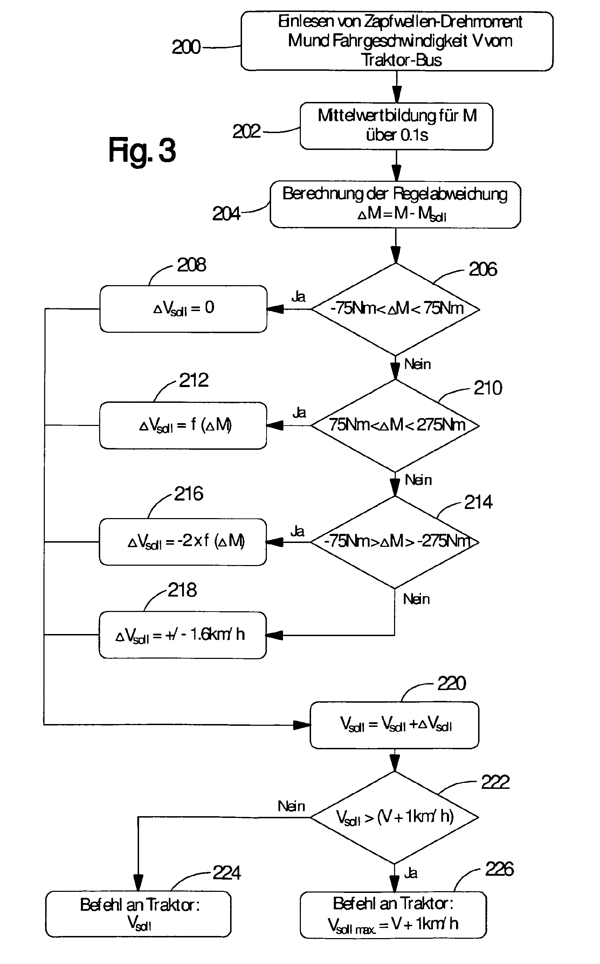

Die dann in der Steuereinheit 60 ablaufende Routine ist im Programmablaufplan (Figur 3) dargestellt. Das Zapfwellendrehmoment wird im Schritt 200 über den Bus 62 erfasst und im Schritt 202 mit einer gleitenden Mittelwertbildung über 0.1 s, d.h. 10 Werte bei einer Samplingfrequenz von 100 Hz, geglättet. Nach der Kalkulation der Regelabweichung im Schritt 204 erfolgt die Berechnung der Geschwindigkeitsänderung im Sinne eines Dreipunktreglers mit nachgeschaltetem Proportionalglied und einer Beschleunigungssowie Geschwindigkeitsbegrenzung in den Schritten 206 bis 226.

Bewegt sich das gemittelte Drehmoment im Schritt 206 in einem Toleranzbereich von 75 Nm über oder unter dem Solldrehmoment, bleibt im Schritt 208 die Fahrgeschwindigkeit konstant. Der Wert von 75 Nm stellt dabei einen Kompromiss zwischen den verschiedenen Arbeiten dar. Für größere Drehmomentschwankungen bei Ladewagen wären 100 Nm besser, beim Mähen oder beim Pressen von Stroh genügen 50 Nm. Es ist denkbar, für den Toleranzbereich eine Eingabemöglichkeit seitens des Fahrers bereitzustellen.

Ist der Betrag der Regelabweichung größer als die Toleranz von 75 Nm, aber kleiner als die so genannte Anpassungstoleranz von 275 Nm (Schritt 210, 214), erfolgt eine Geschwindigkeitsänderung (Schritt 212, 216). Bei zu hohem Drehmoment wird die Größe der Beschleunigung im Bereich von 0 bis 0,9 m/s² proportional zur Drehmomentabweichung kalkuliert, ist das Solldrehmoment dagegen unterschritten, wird mit 0 bis 0,45 m/s² beschleunigt. Die genannten Maximalwerte der Beschleunigung von -0,9 m/s² beim Bremsen und 0,45 m/s² beim Beschleunigen sind gemäß dem subjektiven Empfinden für ein angenehmes Regelungsverhalten bei Feldversuchen gewählt worden. Auch der Wert von 275 Nm über und unter der Toleranzgrenze für den Bereich der an die Drehmomentabweichung gekoppelten Beschleunigung ist im Praxiseinsatz empirisch ermittelt worden und kann für alle Arbeiten konstant eingestellt bleiben. Bei noch größeren Abweichungen wird die Geschwindigkeit um einen festgelegten Wert verändert (Schritt 218). Wenn nötig, könnte auch die Bremse der Arbeitsmaschine 10 durch die Steuereinheit 60 aktiviert werden.

Es folgt nach dem Schritt 220, in dem der neue Sollwert für die Vortriebsgeschwindigkeit berechnet wird, allerdings keine Erhöhung der Sollgeschwindigkeit, wenn die Differenz zur Istgeschwindigkeit größer als ein bestimmter Wert (hier z. B. 1 km/h) ist (Schritt 222, 224). Anderenfalls (Schritt 226) wird die Geschwindigkeit erhöht. Die Höchstgeschwindigkeit entspricht demnach der beim Einschalten des Regelalgorithmus gefahrenen Vortriebsgeschwindigkeit. Damit ist es dem Fahrer jederzeit möglich, durch Zurückziehen des Handgashebels 70 oder Treten des Bremspedals manuell die Geschwindigkeit zu begrenzen oder zu verringern, ohne dass die Sollgeschwindigkeit unbegrenzt erhöht wird. Am Schwadanfang genügt dann beispielsweise eine kurze Betätigung der Bremse, um die zu hohe Fahrgeschwindigkeit am Vorgewende auf ein vertretbares Niveau für die Feldfahrt zu bringen.

Es bleibt anzumerken, dass die Funktionen der Bedienerschnittstellenlogik 64, der Steuereinheit 60 und der Motorsteuerung 80 auf beliebige andere Weise hardwaremäßig realisiert werden könnten, beispielsweise in einem einzigen Bauelement.

## Patentansprüche

1. Antriebsanordnung einer landwirtschaftlichen Arbeitsmaschine (10), mit einem Antriebsmotor (36), der mit einem Zapfwellenausgang (56) zum Antrieb eines Zusatzgeräts (12) und über ein Fahrgetriebe (76, 92) mit im Eingriff mit dem Erdboden befindlichen Mitteln, insbesondere Rädern (22), verbunden ist, und mit einer elektronischen Steuereinheit (60), die mit einer Eingabeeinrichtung (72, 74, 108), einem Sensor (86) zur Erfassung des am Zapfwellenausgang (56) durch ein Zusatzgerät (12) abgenommenen Drehmoments und einem Aktor (104, 106) zur Veränderung des Übersetzungsverhältnisses des Fahrgetriebes (76, 92) verbunden und betreibbar ist, die Vortriebsgeschwindigkeit der Arbeitsmaschine (10) durch eine geeignete Ansteuerung des Aktors (104, 106) derart vorzugeben, dass das am Zapfwellenausgang (56) abgenommene Drehmoment einen vorbestimmten Drehmomentsollwert nicht überschreitet, wobei die Eingabeeinrichtung (72, 74, 108) zur Eingabe von Daten eingerichtet ist, aus denen durch die Steuereinheit (60) der Drehmomentsollwert ableitbar ist, **dadurch gekennzeichnet, dass** die Eingabeeinrichtung (72, 74, 108) eine Taste (96) aufweist, bei deren Betätigung die Eingabeeinrichtung (72, 74, 108) einen aktuellen, mit dem Sensor (86) gemessenen Drehmomentwert als Drehmomentsollwert übernimmt.

2. Antriebsanordnung nach Anspruch 1, **dadurch gekennzeichnet, dass** die Steuereinheit (60) betreibbar ist, die Vortriebsgeschwindigkeit der Arbeitsmaschine (10) durch eine geeignete Ansteuerung des Aktors (104, 106) derart vorzugeben, dass das am Zapfwellenausgang (56) abgenommene Drehmoment zumindest näherungsweise bzw. innerhalb eines vorbestimmten oder eingebbaren Grenzbereichs mit dem vorbestimmten Drehmomentsollwert übereinstimmt.

3. Antriebsanordnung nach einem der Ansprüche 1 oder 2, **dadurch gekennzeichnet, dass** die Drehzahl des Antriebsmotors (36) zumindest näherungsweise konstant gehalten wird.

4. Antriebsanordnung nach einem der Ansprüche 1 bis 3, **dadurch gekennzeichnet, dass** der Sensor (86) zur Erfassung des Drehmoments am Zapfwellenausgang (56) sich an Bord des Arbeitsfahrzeugs (12) befindet.

5. Antriebsanordnung nach einem der Ansprüche 1 bis 4, **dadurch gekennzeichnet, dass** die Steuereinheit (60) betreibbar ist, die Vortriebsgeschwindigkeit der Arbeitsmaschine (10) innerhalb vorbestimmter oder eingebbarer Grenzen zu variieren.

6. Antriebsanordnung nach Anspruch 5, **dadurch gekennzeichnet, dass** die Eingabe einer oberen Grenze der Vortriebsgeschwindigkeit mittels der im fahrergesteuerten Betrieb zum Vorgeben der Geschwindigkeit dienenden Mittel erfolgt.

7. Antriebsanordnung nach Anspruch 5 oder 6, **dadurch gekennzeichnet, dass** die obere Grenze der Vortriebsgeschwindigkeit die beim Aktivieren der selbsttätigen Steuerung der Vortriebsgeschwindigkeit vorliegende Geschwindigkeit der Arbeitsmaschine ist.

8. Landwirtschaftliche Arbeitsmaschine (10), insbesondere Traktor, mit einer Antriebsanordnung nach einem der Ansprüche 1 bis 7.

## Claims

1. Drive arrangement for an agricultural working machine (10), having a driving engine (36), which is connected to a power take-off output (56) for driving an attachment (12) and, via a travelling gear (76, 92), to means, in particular wheels (22), in engagement with the ground, and having an electronic control unit (60), which is connected to an input device (72, 74, 108), to a sensor (86) for detecting the torque taken off at the power take-off output (56) by an attachment (12) and to an actuator (104, 106) for changing the transmission ratio of the travelling gear (76, 92) and may be operated to set the rate of advance of the working machine (10) by suitable activation of the actuator (104, 106) in such a way that the torque taken off at the power take-off output (56) does not exceed a predetermined torque setpoint, the input device (72, 74, 108) being arranged for the input of data from which the torque setpoint may be derived by the control unit (60), **characterized in that** the input device (72, 74, 108) comprises an entry key (96), upon actuation of which the input device (72, 74, 108) adopts a current torque value measured with the sensor (86) as torque setpoint.

2. Drive arrangement according to Claim 1, **characterized in that** the control unit (60) may be operated to preset the rate of advance of the working machine (10) by suitable activation of the actuator (104, 106) in such a way that the torque taken off at the power take-off output (56) corresponds at least approximately or within a predetermined or inputtable limit range with the predetermined torque setpoint.

3. Drive arrangement according to one of Claims 1 or 2, **characterized in that** the speed of the driving engine (36) is kept at least approximately constant.

4. Drive arrangement according to one of Claims 1 to 3, **characterized in that** the sensor (86) for detecting the torque at the power take-off output (56) is located on board the working vehicle (12).

5. Drive arrangement according to one of Claims 1 to 4, **characterized in that** the control unit (60) may be operated to vary the rate of advance of the working machine (10) within predetermined or inputtable limits.

6. Drive arrangement according to Claim 5, **characterized in that** an upper limit for the rate of advance is input by means of the means serving to set the speed when operation is under driver control.

7. Drive arrangement according to Claim 5 or 6, **characterized in that** the upper limit of the rate of advance is the existing speed of the working machine upon activation of automatic rate of advance control.

8. Agricultural working machine (10), in particular a tractor, having a drive arrangement according to one of Claims 1 to 7.

## Revendications

1. Système d'entraînement d'une machine de travail (10) agricole, comportant un moteur d'entraînement (36), qui est relié à une sortie de l'arbre de prise de force (56) pour l'entraînement d'une machine supplémentaire (12) et, par l'intermédiaire d'une boîte de vitesses (76, 92), à des moyens en prise avec le sol, en particulier des roues (22), et comportant une unité de commande (60) électronique, qui est reliée à un dispositif d'entrée (72, 74, 108), à un capteur (86), destiné à détecter le couple de rotation prélevé au niveau de la sortie de l'arbre de prise de force (56) par une machine supplémentaire (12), et à un actionneur (104, 106) destiné à modifier les rapports de transmission de la boîte de vitesses (76, 92), et qui peut être exploitée pour prédéfinir la vitesse d'avance de la machine de travail (10) par l'intermédiaire d'une commande appropriée de l'actionneur (104, 106), de telle sorte que le couple de rotation prélevé au niveau de la sortie de l'arbre de prise de force (56) n'est pas supérieur à une valeur de consigne prédéterminée du couple de rotation, le dispositif d'entrée (72, 74, 108) étant conçu pour entrer des données, à partir desquelles la valeur de consigne du couple de rotation peut être dérivée par l'unité de commande (60), **caractérisé en ce que** le dispositif d'entrée (72, 74, 108) reçoit, en tant que valeur de consigne du couple de rotation, une valeur actuelle du couple de rotation, mesurée par le capteur (86).

2. Système d'entraînement selon la revendication 1, **caractérisé en ce que** l'unité de commande (60) peut être exploitée pour prédéfinir la vitesse d'avance de la machine de travail (10) par l'intermédiaire d'une commande appropriée de l'actionneur (104, 106), de telle sorte que le couple de rotation prélevé au niveau de la sortie de l'arbre de prise de force (56) coïncide, au moins approximativement ou à l'intérieur d'une zone limite prédéterminée ou pouvant être entrée, avec la valeur de consigne prédéterminée du couple de rotation.

3. Système d'entraînement selon la revendication 1 ou 2, **caractérisé en ce que** la vitesse de rotation du moteur d'entraînement (36) est maintenue au moins approximativement constante.

4. Système d'entraînement selon l'une quelconque des revendications 1 à 3, **caractérisé en ce que** le capteur (86), destiné à détecter le couple de rotation au niveau de la sortie de l'arbre de prise de force (56), se situe à bord du véhicule de travail (12).

5. Système d'entraînement selon l'une quelconque des revendications 1 à 4, **caractérisé en ce que** l'unité de commande (60) peut être exploitée pour faire varier la vitesse d'avance de la machine de travail (10) à l'intérieur de limites prédéterminées ou pouvant être entrées.

6. Système d'entraînement selon la revendication 5, **caractérisé en ce que** l'entrée d'une limite supérieure de la vitesse d'avance est effectuée par l'intermédiaire des moyens destinés à prédéfinir la vitesse en cours de service commandé par le conducteur du véhicule.

7. Système d'entraînement selon la revendication 5 ou 6, **caractérisé en ce que** la limite supérieure de la vitesse d'avance est la vitesse de la machine de travail existant lors de l'activation de la commande automatique de la vitesse d'avance.

8. Machine de travail (10) agricole, en particulier tracteur, comportant un système d'entraînement selon l'une quelconque des revendications 1 à 7.
